# EUROPEAN PATENT SPECIFICATION

(11) **EP 0 366 836 B1**
(45) Date of publication and mention of the grant of the patent: **16.06.1993**
(21) Application number: 88202436.7
(22) Date of filing: 31.10.1988
(51) Int. Cl.: C01G 23/02, C01G 30/00, C01G 28/00

(54) **Preparation of pure titanium tetrachlorides and solutions of titanium tetrachlorides**
Herstellung von reinem Titantetrachlorid und Titantetrachlorid-Lösungen
Préparation de tétrachlorures de titane et de solutions de tétrachlorures de titane purs

(43) Date of publication of application: 09.05.1990
(73) Proprietor: KEMIRA, INC., Savannah Georgia 31402 (US)
(72) Inventor: Walters, Larry Lewis, Savannah Georgia, 31410 (US); Anderson, Bruce Martin, Savannah Georgia, 31410 (US)
(74) Representative: Barendregt, Frank, Drs.

(56) References cited:
- US-A- 2 224 061
- US-A- 3 388 993
- US-A- 4 444 666
- US-A- 4 783 324
- JOURNAL OF METALS, vol. 39, no. 7, July 1987, pages 38-41, Warrendale, PA, US; H.E. EGUEZ et al.: "Adsorption of arsenic on activated charcoal"

## Description

The present invention relates to the use of activated carbon to remove arsenic and antimony from titanium tetrachloride solutions.

The production of TiCl₄ from titaniferous ores, such as ilmenite and rutile ores, utilizes chlorine gas and coke in a fluidized bed. An anhydrous TiCl₄ is suitable for regular production of titanium dioxide pigments.

However, this anhydrous TiCl₄ is not suitable for use in other applications such as pearlescent pigment production and in cosmetics because of small but significant amounts of toxic metals such as arsenic and antimony which are not removed by standard processing techniques.

A process of the kind indicated above is known from US-A-3388993. Said publication describes a method for separating metal chlorides by treating a fully volatilized mixture of metal chlorides with active carbon at a temperature above the volatilization temperature of the metal chlorides.

The use of activated carbon in connection with the manufacture of titanium dioxide pigments from acid and water-soluble sulfates is known. U.S. Patent No. 3,761,298 discloses the use of activated carbon to clarify a titanium sulfate solution. This patent does not disclose, however, the use of activated carbon in connection with the production of titanium tetrachloride, nor is there any recognition of the usefulness of activated carbon to remove specifically arsenic and antimony.

It is accordingly an object of the invention to reduce the amount of antimony and arsenic in aqueous solutions or anhydrous liquid titanium tetrachloride.

The present invention concerns a method for removing arsenic and antimony from titanium tetrachloride, characterized by the steps of:
providing commercially available anhydrous titanium tetrachloride in a liquid form containing impurities including arsenic and antimony compounds;
contacting said titanium tetrachloride with activated carbon;
removing at least a portion of said arsenic and antimony compounds from said titanium tetrachloride by means of said activated carbon, thereby producing purified titanium tetrachloride; and
recovering said purified titanium tetrachloride by separation from said activated carbon.

In a preferred embodiment, the commercially available anhydrous titanium tetrachloride before contacting it with activated carbon is formed into an aqueous solution.
In respect of the invention reference is made also to US-A-2224061. This publication describes the discoloration of TiCl₄ by treatment thereof with activated carbon at elevated temperature. The specific removal of Sb and As compounds from anhydrous TiCl₄ or an aqueous solution thereof is not described.

The reduction of the amounts of metal impurities, specifically antimony and arsenic compounds, allows use of the anhydrous or aqueous TiCl₄ in pearlescent pigment production and in cosmetics. Aqueous TiCl₄ is preferred over the anhydrous due to the former's greater ease of handling and that processing can be effected in the presence of moisture.

Generally the reduction in the amount of antimony and arsenic is to less than about 1 ppm.

The following examples illustrate the invention:

### EXAMPLE 1

A sample of commercial available anhydrous TiCl₄ was assayed and found to contain 6.6 ppm combined arsenic and antimony on a TiCl₄ basis. A 250 ml cylindrical column was packed with 250 ml (59.16 grams) of Westvaco Nuchar WV-B 14 x (35 mesh) 0,5 mm activated carbon. The commercial TiCl₄ was passed through the column at a flow rate of 3 ml/min. After 250 ml of the commercial TiCl₄ had passed through the column and was collected, it was assayed and found to contain less than 1 ppm arsenic and antimony combined. The column was regenerated by heating and to 140°C in place with heating and by passing a stream of dry nitrogen through the column. The TiCl₄ collected upon regeneration was assayed and found to contain 65 ppm antimony and arsenic combined. The same column was used to produce another 500 ml of TiCl₄ containing less than 1 ppm combined arsenic and antimony with another regeneration after the second 250 ml sample was produced.

### EXAMPLE 2

A commercially available anhydrous TiCl₄ was used to produce a 50% aqueous TiCl₄ solution. The solution was assayed and found to contain 18 ppm of arsenic and antimony combined on a solution weight basis.

Two 250 ml of cylindrical cylinders were each packed with 250 ml of Nuchar WV-B 14 x (35 mesh) 0,5 mm activated carbon. 11,460 ml of the prepared 50% TiCl₄ solution were pumped through the two columns in series. The maximum flow rate obtained was 20.4 ml per minute. The purified solution was assayed and found to contain less than 1 ppm arsenic and antimony combined.

### EXAMPLE 3

A commercially available TiCl₄ was assayed and found to contain 11 ppm arsenic and antimony combined.

A (500 gallon) 1892,5 l cylindrical cylinder was packed with (1000 pounds) 453 kg of Nuchar WV-B 14 x (35 mesh) 0,5 mm activated carbon. The commercially available TiCl₄ was mixed with water to produce a solution containing between 400 g/l TiCl₄ and 500 g/l TiCl₄. Over a two month period, the aqueous TiCl₄ solution was passed through the carbon at a flow rate not exceeding (10 gallons) 37,8 l per minute. 65 tons of anhydrous TiCl₄ were used, and the resulting purified aqueous TiCl₄ solution was assayed and found to contain less than 1 ppm arsenic and antimony combined on a solution weight basis.

### EXAMPLE 4

A sample of commercially available TiCl₄ was assayed and found to contain 23.3 ppm antimony and arsenic combined. A 57% aqueous solution was produced from this TiCl₄ and found to contain 13.6 ppm antimony and arsenic combined.

A 250 ml cylindrical cylinder was packed with 250 ml of Nuchar WV-B 14 x (35 mesh) 0,5 mm activated carbon and the 57% aqueous TiCl₄ was passed through the carbon with nitrogen at a flow rate of 5 ml/min. A 1000 ml sample was collected and assayed and found to contain less than 1 ppm antimony and arsenic combined.

3000 ml of 53% aqueous TiCl₄ was prepared from different commercial TiCl₄ and found to contain 6.3 ppm arsenic and antimony. The sample was passed through the same column and collected in 500 ml amounts. The six samples were assayed and found to all contain less than 1 ppm arsenic and antimony combined.

## Claims

1. A method for removing arsenic and antimony from titanium tetrachloride, characterized by the steps of:
providing commercially available anhydrous titanium tetrachloride in a liquid form containing impurities including arsenic and antimony compounds;
contacting said titanium tetrachloride with activated carbon;
removing at least a portion of said arsenic and antimony compounds from said titanium tetrachloride by means of said activated carbon, thereby producing purified titanium tetrachloride; and
recovering said purified titanium tetrachloride by separation from said activated carbon.

2. The method according to claim 1 wherein the commercially available anhydrous titanium tetrachloride before contacting it with activated carbon is formed into an aqueous solution.

## Patentansprüche

1. Verfahren zum Entfernen von Arsen und Antimon aus Titantetrachlorid, **gekennzeichnet durch** folgende Stufen:
man beschafft im Handel erhältliches wasserfreies Titantetrachlorid in flüssiger Form, das Verunreinigungen, einschließlich Arsen- und Antimonverbindungen, enthält;
das Titantetrachlorid wird mit Aktivkohle in Berührung gebracht;
es wird mindestens ein Teil der Arsen- und Antimonverbindungen aus dem Titantetrachlorid mittels der Aktivkohle entfernt, wodurch gereinigtes Titantetrachlorid erzeugt wird;
und das gereinigte Titantetrachlorid wird durch Abtrennung von der Aktivkohle gewonnen.

2. Verfahren nach Anspruch 1, bei dem aus dem im Handel erhältlichen wasserfreien Titantetrachlorid eine wäßrige Lösung gebildet wird, bevor es mit Aktivkohle in Berührung gebracht wird.

## Revendications

1. Méthode d'élimination de l'arsenic et de l'antimoine du tétrachlorure de titane, caractérisée par les étapes de :
prévoir du tétrachlorure de titane anhydre du commerce, sous une forme liquide, contenant des impuretés comprenant des composés d'arsenic et d'antimoine ;
mettre ledit tétrachlorure de titane en contact avec du charbon activé ;
éliminer au moins une portion desdits composés d'arsenic et d'antimoine dudit tétrachlorure de titane par ledit charbon activé, pour ainsi produire du tétrachlorure de titane purifié ; et
récupérer ledit tétrachlorure de titane purifié par séparation dudit charbon activé.

2. Méthode selon la revendication 1, où le tétrachlorure de titane anhydre du commerce est mis en une solution aqueuse avant de le mettre en contact avec le charbon activé.
